(19) Europäisches Patentamt
European Patent Office
Office européen des brevets

(11) Veröffentlichungsnummer: **0 015 466**
**A1**

(12) # EUROPÄISCHE PATENTANMELDUNG

(21) Anmeldenummer: **80100907.7**

(22) Anmeldetag: **25.02.80**

(51) Int. Cl.³: **C 08 F 136/04**, C 08 F 4/34

(30) Priorität: **03.03.79 DE 2908298**

(43) Veröffentlichungstag der Anmeldung: **17.09.80**
**Patentblatt 80/19**

(84) Benannte Vertragsstaaten: **DE FR GB IT**

(71) Anmelder: **BAYER AG, Zentralbereich Patente, Marken und Lizenzen, D-5090 Leverkusen 1, Bayerwerk (DE)**

(72) Erfinder: **Heitz, Walter, Prof. Dr., Am Schmidtborn 5, D-3575 Kirchhain 1 (DE)**
Erfinder: **Ball, Peter, Dr., Am Burger Wald 71, D-8267 Neu Oetting (DE)**

(54) **Verfahren zur Herstellung von telechelen Dienpolymerisaten.**

(57) Verwendung von Alkyl- und/oder Cycloalkylperoxidicarbonaten als Radikalinitiatoren.

EP 0 015 466 A1

0015466

BAYER AKTIENGESELLSCHAFT
Zentralbereich
Patente, Marken und Lizenzen

5090 Leverkusen, Bayerwerk
Kb/Krö

Verfahren zur Herstellung von telechelen Dienpolymerisaten

Gegenstand der Anmeldung ist ein Verfahren zur Herstellung von Dienpolymerisaten mit 2 jeweils endständigen funktionellen Gruppen (Telechele) durch Polymerisation von konjugierten Dienen in Gegenwart von Alkyl- und/oder Cycloalkylperoxidicarbonaten.

Polymere mit funktionellen Endgruppen sind bereits bekannt. Sie können beispielsweise hergestellt werden durch Lösungs- oder Emulsionspolymerisation von Dienen unter Verwendung von Azodicarbonsäureestern als Initiatoren (D.M. French, Rubber Chem. Technol. 42, 71 (1969)). Es ist außerdem bekannt, daß Polymerisationsreaktionen nach dem Erreichen eines maximalen Umsatzes, der von den Reaktionsparametern abhängt und über einen großen Bereich variieren kann, zum Stillstand kommen, wenn Initiatoren mit kurzen Halbwertzeiten verwendet werden und keine Beeinflussung der Polymerisation durch Gelbildung erfolgt (A.V. Tobolsky, J.Amer.Chem.Soc. 80, 5927 (1958)).

Polymerisate mit endständigen Estergruppen können beispielsweise hergestellt werden durch Polymerisation von Dienen wie Butadien oder Chloropren in Gegenwart von Azodicarbonsäureestern. Durch Reduktion mit Lithiumaluminiumhydrid werden daraus Polymerisate mit endständigen Hydroxylgruppen erhalten (US-Patent 2 877 212; Journal of Polymer Science, Vol. 4, S. 1898-1901, 1966).

Im US-Patent 3 306 888 ist die Herstellung von Azodialkoholen beschrieben, die als Initiatoren verwendet werden können und direkt zu Polymerisaten mit endständigen Hydroxylgruppen führen.

Aus Makromolekulare Chemie 177, 1835 (1976) ist es bekannt, daß Ethylen mit Hilfe von Dialkylperoxidicarbonaten als Radikalinitiatoren polymerisiert werden kann. Dabei wird das gebildete Primärradikal R - O - COO• unter Erhalt der Carbonatstruktur in das Polymere eingebaut. Wegen der Übertragungsreaktionen mit dem Initiator entstehen bei der Polymerisation von Ethylen jedoch nur monofunktionelle Produkte. Die erhaltenen Polymeren besitzen daher lediglich eine endständige Carbonatgruppe.

Überraschenderweise wurde nun gefunden, daß diese Übertragungsreaktion bei der Polymerisation von Dienen nicht eintritt. Man erhält vielmehr telechele Dienpolymerisate mit zwei endständigen Carbonatgruppen. Das Verfahren eröffnet daher neue Möglichkeiten zur Synthese von telechelen Polymeren.

Gegenstand der Erfindung ist ein Verfahren zur Herstellung telecheler Dienpolymerisate mit Carbonatendgruppen durch radikalische Polymerisation konjugierter Diene,

dadurch gekennzeichnet, daß man als Radikalinitiatoren 1 bis 20 Gew.-%, bezogen auf eingesetztes Dien, an Peroxidicarbonaten der Formel

$$R-O-\underset{\underset{O}{\|}}{C}-O-O-\underset{\underset{O}{\|}}{C}-O-R$$

verwendet, in der R ein Alkyl- oder Cycloalkylrest mit 1 bis 18 Kohlenstoffatomen ist.

Vorzugsweise werden als Initiatoren Dimethyl-, Diethyl- oder Dicyclohexylperoxidicarbonat verwendet.

Die Peroxidicarbonate sind in bekannter Weise durch Umsetzung von Chlorkohlensäureestern mit $H_2O_2$ in Gegenwart von Basen zugänglich.

Geeignete Monomere sind konjugierte, gegebenenfalls halogensubstituierte Diene mit 4 bis 8 Kohlenstoffatomen wie Butadien, Isopren, Dimethylbutadien und Chloropren. Bevorzugtes Monomer ist Butadien.

Die Polymerisation kann nach allen bekannten Polymerisationsverfahren durchgeführt werden. Vorzugsweise erfolgt sie in Substanz oder in Lösung in einem organischen Lösungsmittel. Geeignete Lösungsmittel sind gesättigte aliphatische oder cycloaliphatische Kohlenwasserstoffe, Ether und Ester wie z. B. Hexan, Cyclohexan, Tetrahydrofuran und Essigsäureethylester. Für die Lösungspolymerisation werden vorzugsweise mehr als 30 Gew.-%ige Lösungen der Monomeren eingesetzt.

Die erfindungsgemäß hergestellten Polymerisate haben i.a.

Molgewichte von 300 bis 20.000, vorzugsweise von 500 bis 15.000. Sie können durch katalytische Hydrierung in gesättigte Polymere mit Carbonatendgruppen und durch Hydrolyse in Polymere mit endständigen Hydroxylgruppen überführt werden. Durch geeignete Umsetzungen ihrer funktionellen Endgruppen können sie auch zum Aufbau höhermolekularer Polymerisate verwendet werden, beispielsweise durch Copolykondensation mit anderen Diestern wie Dimethylterephthalat. Die hydrierten Polymeren können für solche Polykondensationen bei wesentlich höheren Temperaturen eingesetzt werden als die nicht - hydrierten Polymeren.

Die folgenden Beispiele erläutern die Erfindung.

Beispiel 1

Zu einer Lösung von 7,47 g Diethylperoxidicarbonat in 50 ml Hexan - unter $N_2$-Atmosphäre - werden 130 g Butadien gegeben. Die Reaktionsmischung wird unter Rühren 4 Stunden bei 65°C und dann 2 Stunden bei 80°C gehalten. Danach wird das überschüssige Butadien abdestilliert.. Restliches Butadien sowie eventuell durch Nebenreaktionen entstandene niedermolekulare Nebenprodukte werden während 6 Stunden am Rotationsverdampfer bei 0,1mbar und einer Badtemperatur von 90°C entfernt. Es bleiben 26,1 g eines glasklaren Produkts mit $M_n$ = 720 zurück. Ein telecheles Produkt mit zwei Carbonatendgruppen sollte 13,33 % Sauerstoff enthalten. Die Analyse ergab: 13,33 und 13,51 % Sauerstoff.

Beispiel 2

Zu 10,2 g Diethylperoxidicarbonat werden 127 g Butadien gegeben. Die Reaktionsbedingungen und die Aufarbeitung sind analog Beispiel 1. Man erhält 32,6 g eines glasklaren Produkts mit $M_n$ = 610.

Beispiel 3

In einen Autoklaven werden bei -10°C 250 ml (3 Mol) Butadien kondensiert, 15,7 g (0,055 Mol) handelsübliches Dicyclohexylperoxidicarbonat (CHPC) zugegeben und unter Sauerstoffausschluß 8 Std. bei 65°C polymerisiert. Nach anschließendem Abkühlen auf -10°C wird der Autoklav geöffnet und das erhaltene Produkt durch einen Faltenfilter in einen Kolben gegeben. Im Rotationsverdampfer wird bei 0,1 mbar das unverbrauchte Butadien innerhalb von 5 Std. bei einer Badtemperatur von 90°C abdestilliert.

Ausbeute: 45,46 g = 18,4 % (bezogen auf eingesetztes Butadien).

Mittleres Molekulargewicht: $M_n$ = 867 [g/Mol]

Elementaranalyse:

| | C | H | O |
|---|---|---|---|
| ber.: | 78,93 % | 9,98 % | 11,09 % |
| gef.: | 79,32 % | 9,92 % | 10,78 % |

Patentansprüche

1. Verfahren zur Herstellung telecheler Dienpolymerisate mit Carbonatendgruppen durch radikalische Polymerisation konjugierter Diene, dadurch gekennzeichnet, daß man als Radikalinitiatoren 1 bis 20 Gew.-%, bezogen auf eingesetztes Dien, an Peroxidicarbonaten der Formel

$$R-O-\underset{\underset{O}{\|}}{C}-O-O-\underset{\underset{O}{\|}}{C}-O-R$$

verwendet, in der R ein Alkyl- oder Cycloalkylrest mit 1 bis 18 Kohlenstoffatomen ist.

2. Verfahren nach Anspruch 1, dadurch gekennzeichnet, daß man als Radikalinitiatoren Dimethyl-, Diethyl- oder Dicyclohexylperoxidicarbonat verwendet.

3. Verfahren nach Anspruch 1 und 2, dadurch gekennzeichnet, daß man die Polymerisation in Substanz durchführt.

4. Verfahren nach Anspruch 1 und 2, dadurch gekennzeichnet, daß man die Polymerisation in einer mehr als 30 Gew.-%igen Lösung der Monomeren in einem organischen Lösungsmittel durchführt.

0015466

Nummer der Anmeldung

Europäisches Patentamt

# EUROPÄISCHER RECHERCHENBERICHT

EP 80 10 0907

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | POLYMER PREPRINTS, Band 9, Nr. 2, 1968, Seiten 1671-1678, American Chemical Society, Division of Polymer Chemistry<br>Atlantic City, U.S.A.<br>M.S. TOY et al.: "Polyperfluorobutadiene. III. Homogeneous Polymerizations in Bulk"<br>* Seite 1673 *<br>-- | 1,3 | C 08 F 136/04<br>4/34 |
| X | US - A - 3 821 273 (A.J. D'ANGELO)<br>* Spalte 1, Zeilen 5-11; Spalte 4, Zeilen 11,12 *<br>-- | 1 | RECHERCHIERTE SACHGEBIETE (Int. Cl. 3) |
| | CHEMICAL ABSTRACTS, Band 84, Nr. 4, 26. Januar 1976, Seite 85, Nr. 18833t<br>Columbus, Ohio, U.S.A.<br>M.A. ASKAROV et al.: "Synthesis and study of vinylbenzyl chloride-chloroprene copolymers"<br>& UZB. KHIM. ZH. 1975, 19(4), 30-2<br>* Zusammenfassung *<br>-- | 1,2 | C 08 F 36/04<br>136/04<br>4/34 |
| A | US - A - 2 464 062 (F. STRAIN)<br>* Anspruch 7 *<br>---- | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 03-04-1980 | V. HUMBEECK |

EPA form 1503.1 06.78